# EUROPEAN PATENT APPLICATION

(11) **EP 1 746 821 A2**
(43) Date of publication of application: **24.01.2007**
(21) Application number: 06117467.8
(22) Date of filing: 19.07.2006
(51) Int. Cl.: H04N 5/445

(54) **Video processing apparatus**

(30) Priority: 20.07.2005 KR 2005065855
(71) Applicant: Samsung Electronics Co., Ltd., Suwon-si Gyeonggi-do (KR)
(72) Inventor: Song, Min-suk, Gyeonggi-do (KR)
(74) Representative: Perkins, Dawn Elizabeth

(57) **Abstract**

The present invention relates to an apparatus and method of displaying broadcast program information. The apparatus includes a display that displays channel distinguishing information and broadcast time information with regard to a plurality of programs; an input unit that allows a user to select the displayed broadcast time information on one of the programs; and a controller that directs the display to display program information with regard to at least one of the programs corresponding to the selected broadcast time information and the displayed channel distinguishing information, such that the program information is arranged with the channel distinguishing information. Thus, the present invention provides a method for variously and conveniently displaying program information and a video processing apparatus using the same.

## Description

The present invention relates to a method for displaying broadcast program information and a video processing apparatus using the same and, more particularly, to a method for variously and conveniently displaying broadcast program information and a video processing apparatus using the same.

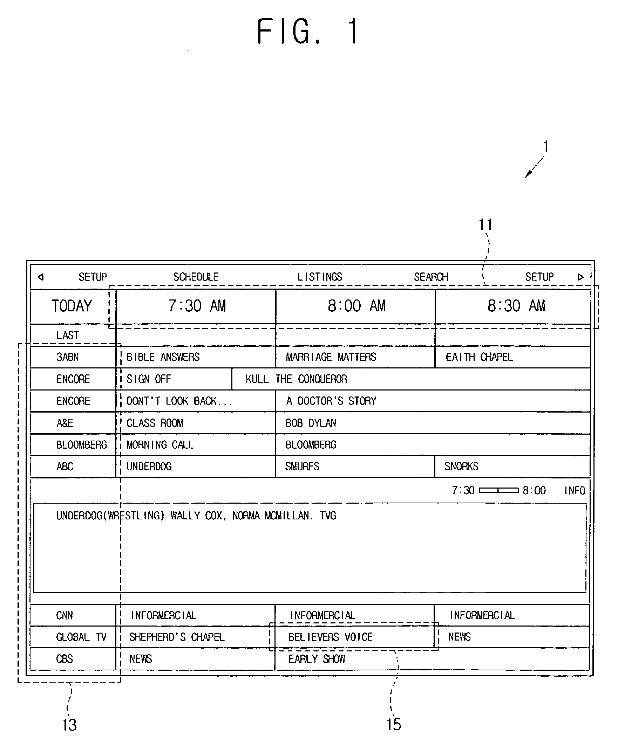

A video processing apparatus, such as a set-top box, a television, etc., receives a video signal of a broadcast program (hereinafter, referred to as a "program") according to digital television broadcasting, cable TV broadcasting, or the like, from a broadcasting station, and processes the received video signal thereby displaying an image. The video processing apparatus receives not only the program but also appendix information about the program from a predetermined service provider. The appendix information about the program includes an electronic program guide (EPG) that provides information such as a channel number, a broadcast time, program introduction, etc. of each program. When the video processing apparatus receives the appendix information including the EPG, the apparatus tabulates the information such as the channel number, the broadcast time, the program introduction, etc., on the basis of the received appendix information, thereby allowing a user to easily use the information. Figure 1 illustrates a user interface (UI) of an electronic program guide of a conventional video processing apparatus.

As shown in Figure 1, the conventional video processing apparatus provides the UI of the EPG, showing the names of broadcasters or channels (hereinafter, referred to as a "channel name 13") corresponding to the programs in a vertical axis, and the broadcast time 11 of the program in a horizontal axis. Further, the video processing apparatus displays a program title 15 corresponding to the channel name 13 and the broadcast time 11 at a position where the channel name 13 and the broadcast time 11 are intersected. Also, the video processing apparatus displays other channel names13 and other broadcast times 11 by moving the channel name 13 up and down, and moving the broadcast time 11 left and right according to a user's manipulation using a remote controller (not shown) or the like. Likewise, the video processing apparatus displays the program title 15 corresponding to the moved channel name 13 and the moved broadcast time 11 at a position where the moved channel name 13 and the moved broadcast time 11 are intersected.

However, the conventional video processing apparatus only displays limited information about the channel name 13 and the broadcast time 11, thus failing to display other information desired by a user, e.g,. a broadcast date in which a user wants to know other information about the program.

Further, the conventional video processing apparatus two-dimensionally displays the information about the program corresponding to two categories of the channel name 13 and the broadcast time 11 on a limited screen, so that the information about only a few programs is displayed corresponding to the channel name 13 and the broadcast time 11 because of the limited screen. However, in the case of digital television broadcasting, hundreds of channels are provided so that a user must inconveniently move the channel name 13 and the broadcast time 11 hundreds of times to find information about a desired program.

Also, the conventional video processing apparatus allows a user to find the information about the program on the basis of only two categories: the channel name 13 and the broadcast time 11. However, a user may want to find the information on the basis of his/her desired categories. In this case, the conventional video processing apparatus cannot satisfy such a user's demand.

Accordingly, it is an aspect of the present invention to provide a method for variously and conveniently displaying program information and a video processing apparatus using the same.

Additional aspects and/or advantages of the invention will be set forth in part in the description which follows and, in part, will be obvious from the description, or may be learned by practice of the invention.

The foregoing and/or other aspects of the present invention are achieved by providing a method of displaying broadcast program information comprising displaying channel distinguishing information and broadcast time information with regard to a plurality of programs; allowing a user to select the displayed broadcast time information on one of the programs; and displaying program information with regard to at least one of the programs corresponding to the selected broadcast time information and the displayed channel distinguishing information, such that the program information is arranged with the channel distinguishing information.

According to another aspect of the present invention, the method further comprises allowing a user to select the displayed channel distinguishing information on one of the programs; and additionally displaying the program information on at least one of the programs corresponding to the selected channel distinguishing information and the selected broadcast time information.

According to another aspect of the present invention, the method further comprises displaying the broadcast time information to be changed by a user's control.

According to another aspect of the present invention, the method further comprises displaying the channel distinguishing information to be changed by a user's control.

The foregoing and/or other aspects of the present invention are achieved by providing a method of displaying broadcast program information comprising displaying channel distinguishing information and broadcast time information with regard to a plurality of programs; allowing a user to select the displayed channel distinguishing information on one of the programs; and displaying program information with regard to at least one of the programs corresponding to the selected channel distinguishing information and the displayed broadcast time information, such that the program information is arranged with the broadcast time information.

According to another aspect of the present invention, the method further comprises allowing a user to select the displayed broadcast time information on one of the programs; and additionally displaying the program information on at least one of the programs corresponding to the selected broadcast time information and the selected channel distinguishing information.

According to another aspect of the present invention, the method further comprises displaying the broadcast time information to be changed by a user's control.

According to another aspect of the present invention, the method further comprises displaying the channel distinguishing information to be changed by a user's control.

The foregoing and/or other aspects of the present invention are achieved by providing a video processing apparatus comprising a memory to store program information, channel distinguishing information and broadcast time information with regard to a plurality of programs; a display unit to display the channel distinguishing information, the broadcast time information and the program information; an input unit to allow a user to select the displayed broadcast time information on one of the programs; and a controller to control the display unit to display the program information on at least one of the programs corresponding to the selected broadcast time information and the displayed channel distinguishing information, such that the program information is arranged with the channel distinguishing information.

According to another aspect of the present invention, the input unit allows a user to select the displayed channel distinguishing information on one of the programs, and the controller to control the display unit to additionally display the program information on at least one of the programs corresponding to the selected channel distinguishing information and the selected broadcast time information.

According to another aspect of the present invention, the controller controls the display unit to change the broadcast time information on the basis of a user's control through the input unit.

According to another aspect of the present invention, the controller controls the display unit to change the channel distinguishing information on the basis of a user's control through the input unit.

The foregoing and/or other aspects of the present invention are achieved by providing a video processing apparatus comprising a memory to store program information, channel distinguishing information and broadcast time information with regard to a plurality of programs; a display unit to display the channel distinguishing information, the broadcast time information and the program information; an input unit to allow a user to select the displayed channel distinguishing information on one of the programs; and a controller to control the display unit to display the program information on at least one of the programs corresponding to the selected channel distinguishing information and the displayed broadcast time information, such that the program information is arranged with the broadcast time information.

According to another aspect of the present invention, the input unit allows a user to select the displayed broadcast time information on one of the programs, and the controller to control the display unit to additionally display the program information on at least one of the programs corresponding to the selected broadcast time information and the selected channel distinguishing information.

According to another aspect of the present invention, the controller controls the display unit to change the broadcast time information on the basis of a user's control through the input unit.

According to another aspect of the present invention, the controller controls the display unit to change the channel distinguishing information on the basis of a user's control through the input unit.

These and other aspects and advantages of the present invention will become apparent and more readily appreciated from the following description of the exemplary embodiments, taken in conjunction with the accompany drawings of which:
Figure 1 illustrates a user interface of an electronic program guide of a conventional video processing apparatus;
Figure 2 is a block diagram schematically illustrating a video processing apparatus according to an exemplary embodiment of the present invention;
Figure 3 illustrates a first exemplary embodiment of a user interface for program information displayed on the video processing apparatus according to the present invention;
Figure 4 illustrates a second exemplary embodiment of a user interface for program information displayed on the video processing apparatus according to the present invention;
Figure 5 illustrates a third exemplary embodiment of a user interface for program information displayed on the video processing apparatus according to the present invention; and
Figure 6 is a flow chart schematically showing the operation of the video processing apparatus according to an exemplary embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

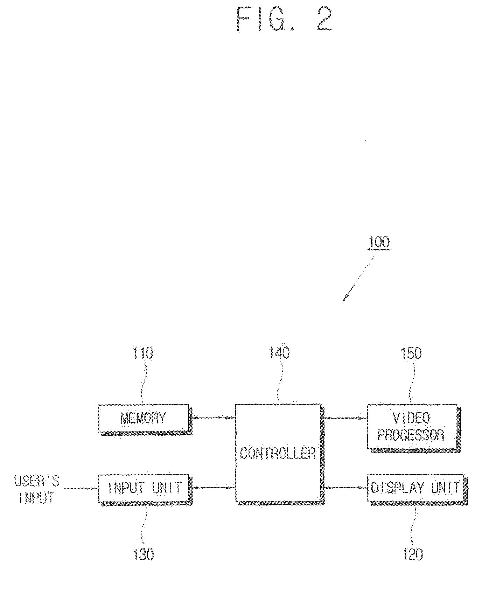

Figure 2 is a block diagram schematically illustrating a video processing apparatus according to an exemplary embodiment of the present invention. A video processing apparatus 100 receives a video signal of a broadcast program according to digital television broadcasting, cable TV broadcasting or the like from a broadcasting station, and processes the received video signal, thereby displaying an image. The video processing apparatus receives not only the broadcast program but also an electronic program guide (EPG) including appendix information about the broadcast program from a predetermined service provider, thereby variously and conveniently displaying the information about the broadcast program on the basis of the EPG. According to an exemplary embodiment of the present invention, the video processing apparatus 100 is achieved by a television system.

As shown in Figure 2, the video processing apparatus 100 includes a memory 110, a display unit 120, an input unit 130 and a controller 140. The memory 110 stores the EPG or the like information about the received broadcast program. According to an exemplary embodiment of the present invention, the program information may include a channel name, a broadcast date, a broadcast day, a program title, a broadcast time, a brief of the program, etc. The memory 110 stores such information corresponding to the programs, respectively. Here, the channel name is an example of information for distinguishing the channels; the broadcast date and the broadcast day are examples of information related to the broadcast time; and the program title, the broadcast time and the brief are examples of information related to the program.

The display unit 120 is controlled by the controller 140 to display the program information such as the channel name, the broadcast date, etc., thereby allowing a user to check the program information. Here, the display unit 120 includes a display device such as a cathode ray tube (CRT), a liquid crystal display (LCD), etc., and a driver for driving the display device. The input unit 130 receives a command from a user and transmits it to the controller 140. Here, the input unit may be a remote controller or the like. A video processor 150 receives a video signal and processes the video signal to be displayed as an image on the display unit 120 on the basis of the control of the controller 140.

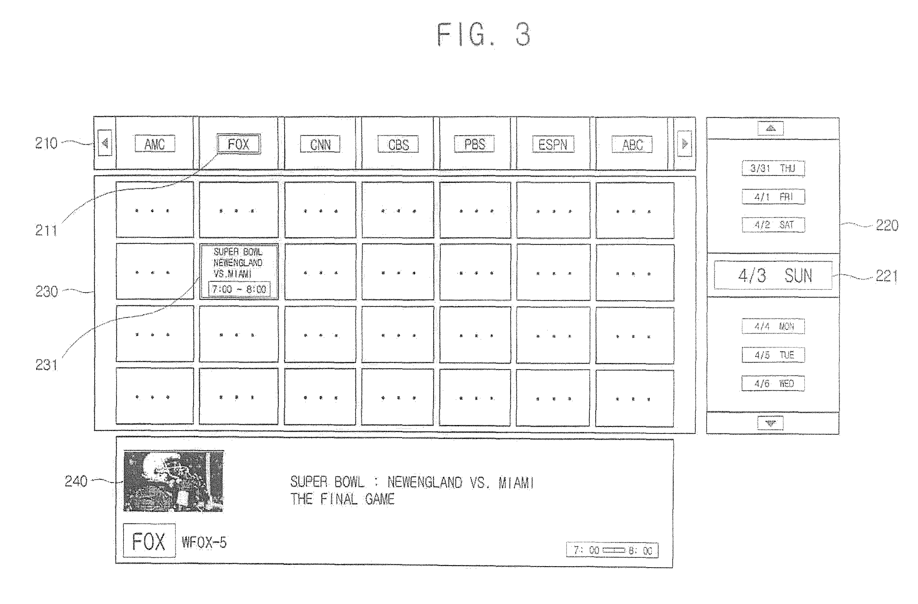

The controller 140 implements a general control for the video processing apparatus 100. In particular, the controller 140, according to an exemplary embodiment of the present invention, controls the display unit 120 to display the program information stored in the memory 110 as a user interface, thereby allowing a user to easily use the program information. Figure 3 illustrates a user interface for program information displayed on the video processing apparatus 100 according to this exemplary embodiment of the present invention.

The controller 140 controls the display unit 120 to display the channel names of the respective channels corresponding to a plurality of programs stored in the memory 110, in which the channel names are arranged in a variable axis 210. Further, the controller 140 controls the display unit 120 to display the broadcast dates and their corresponding days (hereinafter, a broadcast date and the corresponding day are collectively referred to as the "broadcast date") stored in the memory 110, on which the plurality of programs is broadcasted. Here, the broadcast dates are vertically arranged in a filter region 220. Also, the controller 140 controls the display unit 120 to display a main display window 230 occupying a rectangular region between the variable axis 210 and the filter region 220. Here, the controller 140 controls the display unit 120 to display the main display window 230, which is divided into a plurality of regions, so that the program information is displayed in each region.

The controller 140 controls the channel names displayed in the variable axis 210 to be scrolled or paged leftward or rightward according to a user's manipulation through the input unit 130, thereby allowing non-displayed channel names to be shown one by one. In this case, the controller 140 can newly display the channel names according to preset order. Further, the controller 140 controls the broadcast dates displayed in the filter region 220 to be scrolled or paged upward or downward according to a user's manipulation input through the input unit 130, thereby allowing non-displayed broadcast dates to be shown one by one. In this case, the controller 140 can newly display the broadcast dates according to data order.

The controller 140 controls the display unit 120 to display an individual selection mark 221 for highlighting one of the broadcast dates displayed in the filter region 220. Here, the controller 140 controls the individual selection mark 221 to highlight other broadcast dates according to a user's inputs through the input unit 130. When a user selects one of the broadcast dates through the input unit 130, the controller 140 controls information about the program corresponding to the channel name displayed in the variable axis 210 among the programs to be displayed on the selected broadcast date, such that the program information is vertically arranged under the corresponding channel name within the main display window 230. Here, the controller 140 may control the plurality of programs corresponding to one channel name to be arranged in order of the broadcast time. Further, the controller 140 may control the program title and its broadcast time to be displayed as the program information.

Further, the controller 140 controls the display unit 120 to display an individual selection mark 231 for highlighting program information displayed on the main display window 230. Here, the controller 140 controls the individual selection mark 231 to move upward, downward, leftward and rightward and to highlight other program information according to a user's inputs through the input unit 130. When a user selects one of the programs through the input unit 130, the controller 140 controls the brief of the selected program to be displayed in a brief window 240 placed under the main display window 230 and having an approximately rectangular shape. Here, the brief of the selected program may include a miniature image of the program, an outline of the program, a rating guide of the program or the like.

Also, the controller 140 controls the display unit 120 to display an individual selection mark 211 for highlighting one of the channel names displayed in the variable axis 210. Here, the controller 140 controls the individual selection mark 211 to move leftward or rightward and to highlight other channel name according to a user's inputs through the input unit 130. When a user selects one of the channel names through the input unit 130, the controller 140 controls the display unit 120 to additionally display the information about the program to be broadcasted on the broadcast date among the plurality of programs corresponding to the selected channel name as long as it can be displayed in each region of the main display window 230. In this case, the controller 140 may control the information about the plurality of programs to be displayed from a left side to a right side and from an upside to a downside in each region of the main display window 230 in order of broadcast time. In the case where the main display window 230 cannot display all the program information, the controller 140 controls the program information to be scrolled or paged up and down or left and right, thereby allowing non-displayed program information to be shown.

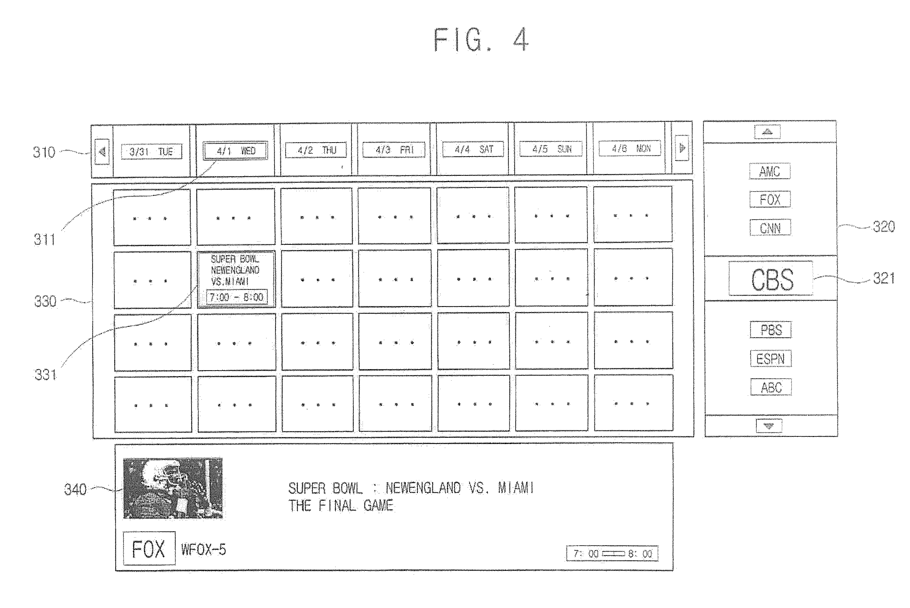

Figure 4 illustrates a second exemplary embodiment of a user interface for program information displayed on the video processing apparatus according to the present invention. Below, repetitive descriptions will be avoided as necessary. In this exemplary embodiment, the broadcast dates, on which the program is displayed, are arranged in a variable axis 310, and the channel names are arranged in a filter region 320. Like the foregoing exemplary embodiment, the controller 140 controls a main display window 330 to be displayed between the variable axis 310 and the filter region 320, and controls the program information to be displayed in each region of the main display window 330.

The controller 140 controls the broadcast dates displayed in the variable axis 310 to be scrolled or paged leftward or rightward according to a user's manipulation through the input unit 130, thereby allowing non-displayed broadcast dates to be shown. Further, the controller 140 controls the channel names displayed in the filter region 320 to be scrolled or paged upward or downward according to a user's input through the input unit 130, thereby allowing non-displayed channel names to be shown.

The controller 140 displays an individual selection mark 321 for highlighting one of the channel names displayed in the filter region 320. Here, the controller 140 controls the individual selection mark 321 to highlight a channel name according to a user's inputs through the input unit 130. When a user selects one of the channel names through the input unit 130, the controller 140 displays the information about the programs, which will be broadcasted on the broadcast dates displayed in the variable axis 310 among the programs corresponding to the selected channel name, to be vertically arranged under the corresponding broadcast date of the main display window 330.

Further, the controller 140 controls the display unit 120 to display an individual selection mark 331 for highlighting one of the program information displayed on the main display window 330. Here, the controller 140 controls the individual selection mark 331 to move upward, downward, leftward and rightward, and to highlight other program information according to a user's inputs through the input unit 130. When a user selects one of the programs through the input unit 130, the controller 140 controls the brief of the selected program to be displayed in a brief window 340 placed under the main display window 330.

Also, the controller 140 displays an individual selection mark 311 for highlighting one of the broadcast dates displayed in the variable axis 310. Here, the controller 140 controls the individual selection mark 311 to move leftward or rightward, and to highlight other broadcast dates according to a user's inputs through the input unit 130. When a user selects one of the broadcast dates through the input unit 130, the controller 140 additionally displays the information about the programs corresponding to the selected channel name among the plurality of programs to be broadcasted on the selected broadcast date as long as it can be displayed in each region of the main display window 330. In this case, the controller 140 may control the information about the plurality of programs to be displayed from a left side to a right side and from an upside to a downside in each region of the main display window 330 in order of broadcast time.

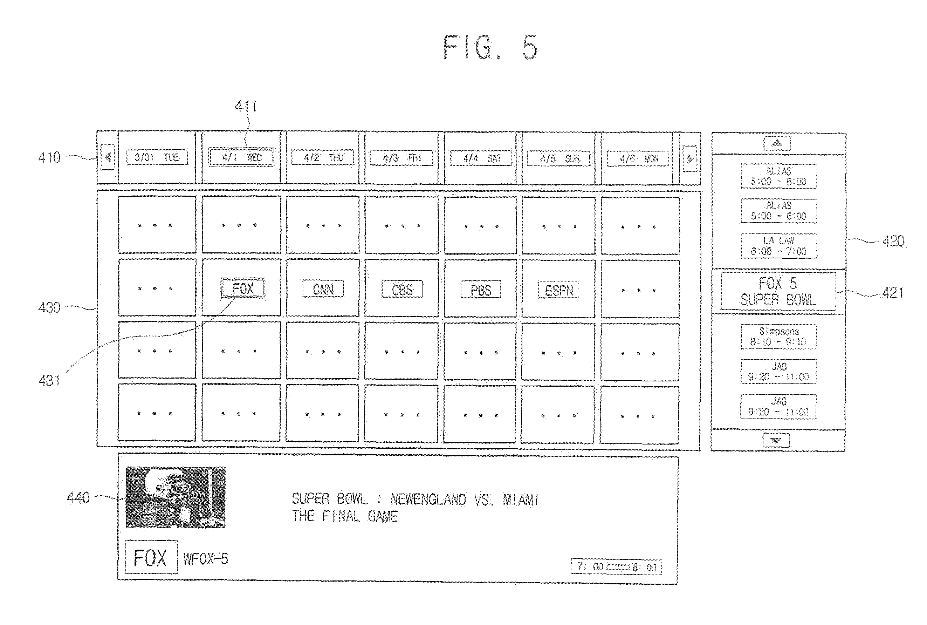

Figure 5 illustrates a third exemplary embodiment of a user interface for program information displayed on the video processing apparatus according to the present invention. Below, repetitive descriptions will be avoided as necessary. In this exemplary embodiment, the broadcast dates, on which the program is displayed, are arranged in a variable axis 410, and the channel names are arranged in regions of a main display window 430. In the case where the main display window 430 cannot display all the channel names, the controller 140 controls the channel names to be scrolled or paged up and down, or left and right, thereby allowing non-displayed channel name to be shown.

The controller 140 controls the display unit 120 to display an individual selection mark 431 for highlighting one of the channel names displayed on the main display window 430. Here, the controller 140 controls the individual selection mark 431 to move up and down, or left and right and to highlight other channel names according to a user's inputs through the input unit 130. When a user selects one of the channel names through the input unit 130, the controller 140 controls the program, which will be broadcasted on the broadcast date displayed in the variable axis 410 corresponding to a vertical column including the selected channel name, to be displayed in a filter region 420.

Further, the controller 140 displays an individual selection mark 411 for highlighting one of the broadcast dates displayed in the variable axis 410, e.g., one of the broadcast dates corresponding to the column including the selected channel name. Here, the controller 140 controls the individual selection mark 411 to move leftward or rightward, and to highlight other broadcast dates according to a user's inputs through the input unit 130. When a user selects one of the broadcast dates through the input unit 130, the controller 140 displays the information about the program corresponding to the selected channel name among the plurality of programs to be broadcasted on the selected broadcast date in the filter region 420.

The controller 140 displays an individual selection mark 421 for highlighting program information displayed in the filter region 420. Here, the controller 140 controls the individual selection mark 421 to move up and down and to highlight other program information according to a user's inputs through the input unit 130. When a user selects program information through the input unit 130, the controller 140 controls the brief of the selected program to be displayed in a brief window 440 placed under the main display window 430.

Alternatively, the channel names may be arranged in the variable axis 410, and the broadcast date may be displayed in each region of the main display window 430, which are not shown in the accompanying drawings. In this case, the controller 140 controls an individual selection mark 431 to be displayed for highlighting one of the broadcast dates displayed on the main display window 430. Here, the controller 140 controls the individual selection mark 431 to move up and down ,or left and right, and to highlight other broadcast dates according to a user's input through the input unit 130. When a user selects one of the broadcast dates through the input unit 130, the controller 140 controls the program, which corresponds to the channel name displayed in the variable axis 410 corresponding to a vertical column including the selected broadcast date, to be displayed in a filter region 420. Like the foregoing exemplary embodiments, the controller 140 displays the individual selection mark 421 for highlighting one of the program information displayed in the filter region 420. Further, the controller 140 controls the individual selection mark 421 to move up and down and to highlight other program information according to a user's inputs through the input unit 130. When a user selects one of the program information by moving the individual selection mark 421 up and down through the input unit 130, the controller 140 controls the brief of the selected program to be displayed in the brief window 440.

In the meantime, the controller 140 may display a menu to alternately display the categories such as the channel name, the broadcast date, the program information, etc., which are displayed in the vertical axes 210, 310 and 410, the filter region 220, 320 and 420, and the main display window 230, 340 and 440; and may change the categories according to a user's input through the input unit 130. For example, the controller 140 can change the user interface of Figure 3 into that of Figure 4 according to a user's input for changing the categories.

According to another exemplary embodiment of the present invention, the controller 140 may be realized by a computer program implemented by a microprocessor such as a central processing unit (CPU). The computer program may be stored in a memory such as a flash memory or the like, and uses a suitable language for the CPU so as to perform the foregoing operations of the controller 140.

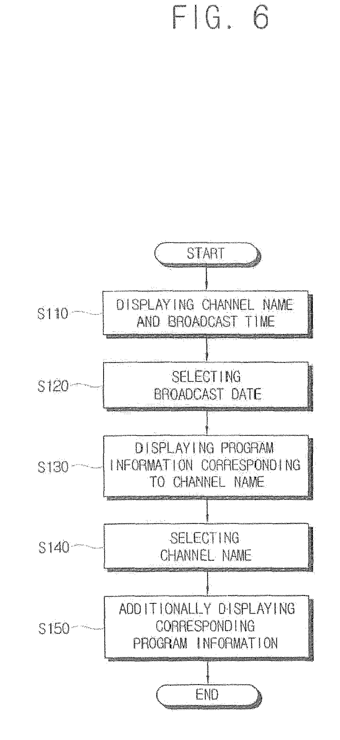

Figure 6 is a flow chart schematically showing the operation of the video processing apparatus according to another exemplary embodiment of the present invention. At operation S110, the controller 140 controls the display unit 120 to display the channel name and the broadcast date in the vertical axes 210, 310 or 410, and the filter region 220, 320 or 420, respectively. Alternatively, the controller 140 may control the display unit 120 to display the broadcast date and the channel name in the vertical axes 210, 310 or 410, and the filter region 220, 320 or 420, respectively.

At operation S120, the controller 140 allows a user to select the broadcast date through the input unit 130 while displaying and moving the individual selection mark 221, 321 or 421 in the filter region 220, 320 or 420. At operation S130, the controller 140 controls the program information corresponding to the selected broadcast date to be arranged in the vertical column of the main display window 230, 340 or 440 placed under the corresponding channel name. Alternatively, the controller 140 allows a user to select the channel name in the filter region 220, 320 or 420 (at the operation S120), and controls the program information corresponding to the selected channel name to be arranged in the vertical column of the main display window 230, 340 or 440 placed under the corresponding broadcast date (at the operation S130). Meanwhile, the controller 140 allows a user to select the program information through the input unit 130 while displaying and moving the individual selection mark 231, 331 or 431 in the main display window 230, 340 or 440, and controls the brief window 240, 340 and 440 to display the brief of the selected program.

At operation S140, the controller 140 allows a user to select the channel name through the input unit 130 while displaying and moving the individual selection mark 211, 311 or 411 in the variable axis 210, 310 or 410. At operation S150, the controller 140 additionally displays the program information corresponding to the selected channel name as long as it can be displayed in all regions of the main display window 230, 340 or 440. Alternatively, the controller 140 allows a user to select the broadcast date in the variable axis 210, 310 or 410 (at operation S140), and additionally displays the program information corresponding to the selected broadcast date as long as it can be displayed in all regions of the main display window 230, 340 or 440.

As described above, the present invention provides a method for variously and conveniently displaying broadcast program information and a video processing apparatus using the same.

Although a few exemplary embodiments of the present invention have been shown and described, it will be appreciated by those skilled in the art that changes may be made in these exemplary embodiments without departing from the the scope of the invention as defined in the appended claims.

## Claims

1. A video processing apparatus comprising:
a memory (110) which stores program information, channel distinguishing information and broadcast time information, with regard to a plurality of programs; a display unit (120) which displays the channel distinguishing information, the broadcast time information and the program information;
an input unit (130) which allows a user to select one item of the displayed broadcast time information; and
a controller to control (140) the display unit (120) to display at least one item of the program information relating to at least one of the plurality of programs corresponding to the selected broadcast time information and the displayed channel distinguishing information, such that the at least one item of the program information is arranged with the channel distinguishing information.

2. The video processing apparatus according to claim 1, wherein the input unit (130) allows the user to select one item of the displayed channel distinguishing information, and
the controller (140) controls the display unit (120) to additionally display the one item of the program information relating to one of the plurality of programs corresponding to the selected channel distinguishing information and the selected broadcast time information.

3. A video processing apparatus comprising:
a memory (110) which stores program information, channel distinguishing information and broadcast time information, with regard to a plurality of programs; a display unit (120) which displays the channel distinguishing information, the broadcast time information and the program information;
an input unit (130) which allows a user to select one item of the displayed channel distinguishing information; and
a controller (140) which controls the display unit (120) to display at least one item of the program information relating to at least one of the plurality of programs corresponding to the selected channel distinguishing information and the displayed broadcast time information, such that the at least one item of the program information is arranged with the broadcast time information.

4. The video processing apparatus according to claim 3, wherein the input unit (130) allows the user to select one item of the displayed broadcast time information, and
the controller (140) controls the display unit (120) to additionally display the one item of the program information relating to the one of the plurality of programs corresponding to the selected broadcast time information and the selected channel distinguishing information.

5. The video processing apparatus according to any one of the preceding claims, wherein the controller (140) controls the display unit (120) to change the displayed broadcast time information on the basis of a user's control through the input unit (130).

6. The video processing apparatus according to any one of the preceding claims, wherein the controller (140) controls the display unit (120) to change the displayed channel distinguishing information on the basis of a user's control through the input unit (130).

7. A method of displaying broadcast program information, the method comprising:
displaying channel distinguishing information and broadcast time information with regard to a plurality of programs;
allowing a user to select one item of the displayed broadcast time information; and
displaying at least one item of program information relating to at least one of the plurality of programs corresponding to the selected broadcast time information and the displayed channel distinguishing information, such that the at least one item of program information is arranged with the channel distinguishing information.

8. The method according to claim 7, further comprising:
allowing a user to select one item of the displayed channel distinguishing information; and
additionally displaying the one item of program information relating to the one of the plurality of programs corresponding to the selected channel distinguishing information and the selected broadcast time information.

9. A method of displaying broadcast program information, the method comprising:
displaying channel distinguishing information and broadcast time information with regard to a plurality of programs;
allowing a user to select one item of the displayed channel distinguishing information; and
displaying at least one item of program information relating to at least one of the plurality of programs corresponding to the selected channel distinguishing information and the displayed broadcast time information, such that the at least one item of program information is arranged with the broadcast time information.

10. The method according to claim 9, further comprising:
allowing a user to select one item of the displayed broadcast time information; and
additionally displaying the one item of program information relating to the one of the plurality of programs corresponding to the selected broadcast time information and the selected channel distinguishing information.

11. The method according to any one of claims 7 to 10, further comprising changing the displayed broadcast time information according to a user's control.

12. The method according to any one of claims 7 to 11, further comprising changing the displayed channel distinguishing information according to a user's control.
